Europäisches Patentamt

(19) European Patent Office

Office européen des brevets

(11) Publication number : **0 454 301 B1**

(12) **EUROPEAN PATENT SPECIFICATION**

(45) Date of publication of patent specification :
14.06.95 Bulletin 95/24

(51) Int. Cl.[6] : **G01K 13/06**

(21) Application number : 91302477.4

(22) Date of filing : 21.03.91

(54) **Prediction of heat streaks in metal rolling.**

(30) Priority : 27.03.90 JP 78217/90

(43) Date of publication of application :
30.10.91 Bulletin 91/44

(45) Publication of the grant of the patent :
14.06.95 Bulletin 95/24

(84) Designated Contracting States :
DE FR GB

(56) References cited :
INSTRUMENT PRACTICE, vol. 27, no. 9, September 1970, page 632; "Technology applied: Strip profile measurement"

(73) Proprietor : **NISSHIN STEEL CO., LTD.**
4-1 Marunouchi 3-chome
Chiyoda-ku Tokyo 100 (JP)

(72) Inventor : **Aizawa, Atsushi, c/o Tekko Kenkyusho**
Nisshin Steel Co., Ltd.,
5, Ishizunishi-machi
Sakai-shi, Osaka (JP)
Inventor : **Matsumoto, Yoshinori, c/o Tekko Kenkyusho**
Nisshin Steel Co., Ltd.,
5, Ishizunishi-machi
Sakai-shi, Osaka (JP)
Inventor : **Hara, Kenji, c/o Tekko Kenkyusho**
Nisshin Steel Co., Ltd.,
5, Ishizunishi-machi
Sakai-shi, Osaka (JP)
Inventor : **Yamada, Toshiro, c/o Tekko Kenkyusho**
Nisshin Steel Co., Ltd.,
5, Ishizunishi-machi
Sakai-shi, Osaka (JP)

(74) Representative : **Shindler, Nigel et al**
BATCHELLOR, KIRK & CO.
2 Pear Tree Court
Farringdon Road
London EC1R 0DS (GB)

## Description

The present invention relates to a method of predicting the formation of heat streaks on a metal strip such as a steel strip being cold rolled, and a thermal sensor roll to be used for the prediction method.

During cold rolling a metal strip such as a steel strip, the metal strip may be burnt onto the surface of a work roll. The burning causes the formation of surface defects, i.e. so-called heat streaks, on the surface of the metal strip to be rolled. The surface of the work roll is also damaged by the burning. The damaged surface pattern of the work roll may then be transferred onto the surface of a following strip.

The formation of heat streaks is mainly substantially caused by burning resulting from the destruction of the oil film on the surface of the strip. For instance, in the case where a metal strip is cold rolled with a high ratio of reduction or at a high rolling speed under the condition that lubrication by oil film is poor or that a coolant provides too small cooling function, the temperature of the metal strip rises due to heat caused by friction below the metal strip and the work roll, the plastic deformation of the metal strip, the shortage of the lubricant oil, etc. Consequently, the pressure and/or temperature of oil film in the roll bite rises, resulting in the destruction of the oil film which causes burning between the work roll and the metal strip to be rolled.

The formation of heat streaks causes various kinds of bad influences, such as the deterioration of the surface property of a rolled product, the reduction of yield ratio and the lowering of work efficiency. In this regard, it is necessary to control the temperature of the metal strip being rolled just below the roll bite during cold rolling under a predetermined value.

However, there has not been proposed so far a proper sensor for detecting the temperature of a metal strip in order to prevent heat streaks from occurring. On the actual stage, rolling conditions such as reduction ratio and rolling speed are preset in a safety range referring to experimental prediction, to perform cold rolling without the formation of heat streaks. Consequently, rolling operation using the capacity of a rolling mill to the maximum extent is not done, resulting in the lowering of efficiency of production.

There has been proposed a method of directly detecting the temperature of a metal strip being rolled using an infrared radiation thermometer disposed at the exit part of a rolling mill, by Japanese Patent Application Laid-Open 62-199209. In this method, the radiation thermometer using infrared beams as the measuring range of wave length is received in a cylindrical vessel, and a light shielding plate and an air supply nozzle are disposed at the opened side of the cylindrical vessel. Compressed air is injected through the air supply nozzle onto the surface of the metal strip, so as to purge the vapor of rolling oil from the surface of the metal strip. Thus, the temperature of the metal strip is detected in non-contact state.

However, the atmosphere in which the temperature of the metal strip is detected by the infrared radiation thermometer is generally contaminated with the vapor of rolling oil and so on. The surface of the metal strip is covered with the film of the rolling oil. In this situation, radiation ratio from the surface of the metal strip varies widely according to the conditions. In addition, the radiation ratio also changes in response to the kind of metal strip to be rolled and the degree of acid pickling. These conditions act as disturbance factors on the detected values and lower the reliability of detection. In addition, this makes it impossible to preset the radiation ratio under stable conditions, and it is difficult to obtain the change patter of the radiation ratio corresponding to the actual temperature of the metal strip. As a result, the detected value of the temperature of the metal strip with high accuracy is not expected, so that the formation of heat streaks cannot be predicted with great reliability.

The present invention therefore seeks to provide a method for detecting the temperature of a metal strip being rolled just below the bite of a work roll under stable conditions without any adverse disturbing influences.

The "Technology Applied: Strip profile measurement" in Instrument Practice, Vol. 27, No.9, September 1970, describes an arrangement in which thermocouples are positioned at different depths in a work roll of a rolling mill, to monitor thermal fatigue. However, this does not provide an accurate measurement of the temperature of the sheet material itself, as is necessary to predict the formation of heat streaks.

The present invention also seeks to improve the accuracy of prediction of the formation of heat streaks by reference to the detected temperature.

The present invention also seeks to detect the temperature of the metal strip being rolled with high accuracy using a plurality of thermocouples each embedded with different depth in a thermal sensor roll which comes in contact with the metal strip to be rolled.

According to the present invention, there is provided a method of predicting the formation of heat streaks in a metal strip in a rolling mill, which method comprises:

attaching one or more temperature detecting blocks, each having a plurality of thermocouples which are positioned at different depths from the surface, to a thermal sensor roll,

arranging said thermal sensor roll at the outlet of the rolling mill at a position in contact with the metal strip,

detecting the temperatures of the interior of said thermal sensor roll at said different depths by means of said thermocouples,

calculating the temperature of the metal strip being rolled just below the bite of a work roll on the basis of measurements from the thermocouples, and

comparing the calculated temperature with an expected temperature of heat streak formation previously derived from reduction ratio and rolling speed data.

A plurality of thermocouples embedded in the temperature detecting block are preferably located as close together as possible along both the axial and circumferential directions of the thermal sensor roll. A plurality of the similar temperature detecting blocks may be attached to the surface of the sensor roll along the axial direction and/or the circumferential direction.

Temperature data obtained by the thermocouples embedded with individually different depth include various influences derived from heat transfer on the surface of the thermal sensor roll, heat transmissions from the metal strip being rolled to the thermal sensor roll and heat transmission inside the thermal sensor roll. In this regard, the temperature of the metal strip can be calculated from thermal graduation and its chronological change on the basis of internal temperature data of the thermal sensor roll on the contrary. The temperature value of the metal strip obtained in this way has a high reliability hardly affected by disturbance factors different from the measuring method using an infrared radiation thermometer.

In fact, heat streaks are likely to be formed, when the temperature of the metal strip exceeds a temperature of heat streak formation which has an intimate relationship with rolling ratio, rolling speed and so on. The temperature of heat streak formation can be experimentally obtained as a function including the rolling ratio, rolling speed and so on.

In this consequence, the formation of heat streaks can be predicted with high accuracy, by comparing the calculated value representing the temperature of the metal strip obtained by the thermal sensor roll with the temperature level of heat streak formation. The other objects and features of the present invention will be apparent from the following description with reference to the drawings attached.

Figure 1 is a block diagram illustrating a system for calculating the temperature of a metal strip according to the present invention.

Figure 2 is a sectional view of a thermal sensor roll.

Figure 3 is an outline view showing a rolling mill in which the thermal sensor roll is incorporated.

Figure 4 is a diagram illustrating the advantage of the present invention in comparison with a conventional method.

## DETAILED DESCRIPTION OF THE PREFERRED EMBODIMENT

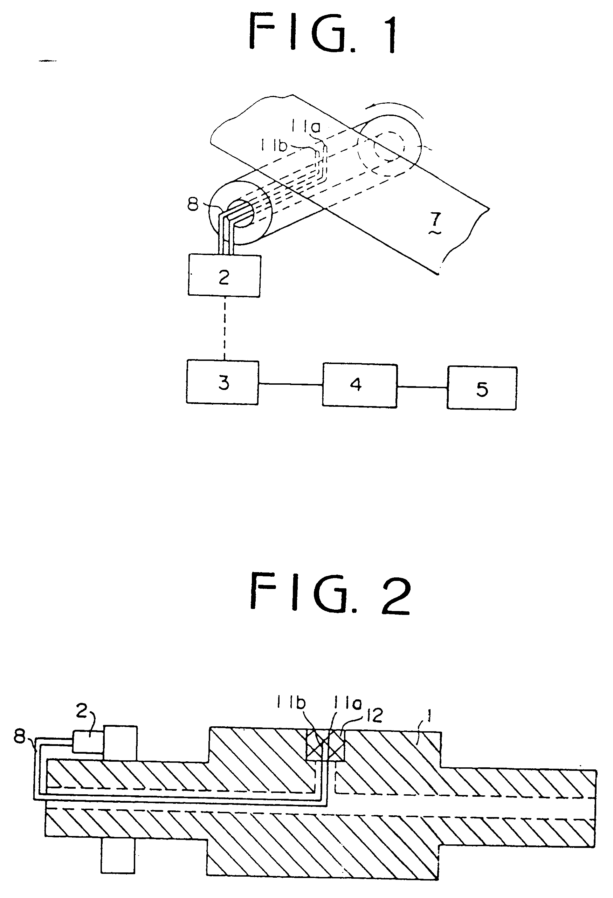

The system for calculating the temperature of a metal strip according to the present invention comprises a thermal sensor roll 1, a transmitter 2, a receiver 3, and an A/D converter 4 and a calculator 5, as shown in Figure 1. Temperature data inside the thermal sensor roll 1 are converted to FM signals and transmitted from the transmitter 2 to the receiver 3. The temperature data are then converted to digital data by the A/D converter 1 and supplied to the calculator 5.

In the calculator 5, a temperature Tv of a metal strip 7 being rolled just below the bite of a work roll is calculated on the basis of the supplied data. The temperature Tv is compared with a heat streak formation temperature Ts estimated on the basis of rolling ratio, rolling speed, etc, at the time of measuring.

In the case where the temperature Tv of the metal strip is higher than the temperature Ts of heat streak formation, it is recognized that the formation of heat streak is likely. Thus in the event of such an occurrence a visible alarm signal such as a flashing lamp or an audio alarm signal such as a buzzer, is triggered. In addition if the temperature Tv of the metal strip rises so quickly that the temperature Tv of the metal strip is likely to exceed the temperature Ts of heat streaks formation in a few minutes, so that the formation of heat streaks is predicted, the same alarm signal is also produced.

The thermal sensor roll 1 is equipped with a temperature detecting block 12 in which a plurality of thermocouples 11a, 11b are embedded. The detecting terminal of the thermocouple 11a is located at a position closer to the outer surface of the thermal sensor roll 1 than that of the detecting terminal of the other thermocouple 11b, but the thermocouples 11a, 11b are arranged as close together as possible in both the axial direction and circumferential directions of the thermal sensor roll 1.

A plurality of similar temperature detecting blocks 12 each carrying further pairs of thermocouples 11a, 11b may be arranged along the axial direction of the thermal sensor roll 1. In the case where a plurality of temperature detecting blocks 12 are used, it is possible to calculate the temperature distribution along the cross direction of the metal strip 7 being rolled just below the bite of the work roll.

A plurality of similar temperature detecting blocks 12 may also be arranged around the circumferential direction of the thermal sensor roll 1. Owing to said circumferential arrangement of a plurality of the temperature detecting blocks 12, it is impossible to detect the temperature of the metal strip 7 being rolled at a plurality of measuring points for every rotation of the sensor roll 1.

Temperature data obtained by the thermocouples 11a, 11b are fed through a compensating lead 8 to the transmitter 2 attached to the side surface of the thermal sensor roll 1.

The calculation of the temperature Tv of the metal strip 7 being rolled just below the bite of the work roll on the basis of the internal temperature data of the thermal sensor roll 1 is performed as explained below.

Given that temperatures at two points with depths $x_1$ and $x_2$ ($x_1 < x_2$) from the surface of the thermal sensor roll 1 are $T_1$ and $T_2$, respectively, the thermal transmission along a straight line gassing through said two points and an extrapolation point on the surface of the temperature detecting block 12 is calculated as follows:

A temperature Tf of the surface of the thermal sensor roll 1 and a heat flux q on the surface of the thermal sensor roll 1 are represented respectively by the following formulae.

$$Tf = AT_1 + BT_2 + CT'_1 + DT'_2 \quad (1)$$
$$q = ET_1 + FT_2 + GT'_1 + HT'_2 \quad (2)$$

Wherein, $T'_1$ and $T'_2$ are primary derivatives $Dt_1/dt$ and $dT_2/dt$, respectively, of the temperatures $T_1$ and $T_2$ by the time t, and constants $A \sim H$ are values predetermined by the depths $x_1$, $x_2$ and the material of the temperature detecting block 12.

A temperature Tr of the metal strip 7 being rolled in contact with the thermal sensor roll is represented by the formula (3), presuming that thermal transmissibility between the metal strip 7 being rolled and the thermal sensor roll 1 is $a_1$.

$$Tr = Tf + q/a_1 \quad (3)$$

The temperature Tv of the metal strip 7 being rolled just below the bite of the work roll is represented by the formulae (4) and (5), wherein the temperature of a coolant or the external atmosphere is Tc, thickness of the metal strip 7 being rolled is h, density of the metal strip 7 being rolled is $\rho_s$ specific heat of the metal strip 7 being rolled is $c_s$, and a time required for the metal strip 7 passing through the position just below the bite of the work roll to the thermal sensor roll 1 is t:

$$Tv = (Tr - Tc) \, xexp(K) + Tc \quad (4)$$
$$K = 2 \times a_2 \times t / (\rho_s \times c_s \times h) \quad (5)$$

Using these formulae (1) - (5), the temperature Tv of the metal strip 7 being rolled just below the bite of the work roll of the rolling mill 6 is calculated in response to the temperatures $T_1$ and $T_2$ at two points in the thermal sensor roll 1, taking into consideration the graduation of a temperature in the thermal sensor roll along a direction vertical to the surface of the thermal sensor roll.

Three or more thermocouples may be embedded in one temperature detecting block 12 so as to provide a corresponding number of measurement positions. Temperatures at two measuring positions optionally selected from these three or more measuring points are detected, the temperature Tv of the metal strip being rolled just below the bite of the work roll is calculated in the same manner as aforementioned, and the calculation is repeated several times. The averaged value of the calculation results is considered as the temperature Tv of the metal strip 7 being rolled. Thereby, the accuracy of calculation is enhanced.

According to the present invention as aforementioned, the temperature Tv of the metal strip 7 being rolled just below the bite of the work roll of the rolling mill 6 is continuously obtained by the calculation using the aforementioned formulas, and compared with the temperature Ts of heat streak formation predicted from reduction ratio, rolling speed and so on at the time of measuring. Accordingly, the data obtained on the temperature Tv is stable and is not influenced by disturbances such as a change of the rolling atmosphere or oil film, so that the comparison of the temperature Tv with the temperature Ts is performed with high accuracy. Thereby, the formation of heat streaks can be predicted. An operation to inhibit the formation of heat streaks in advance, e.g. immediately lowering rolling speed or intensifying the cooling power of coolant, is adopted taking into consideration the prediction. Consequently, rolling operation using the capacity of the rolling mill 6 to the maximum extent can be performed under the rolling condition very close to the situation of heat streak formation. Thus, a rolled product which is excellent in surface appearance free from the formation of heat streaks is obtained with enhanced productivity.

The thermal sensor roll having the construction shown in Figure 2 may be used in various technical fields other than the calculation of the temperature of the metal strip during rolling. For instance, when a plurality of the temperature sensor rolls are arranged along a pass line in a heat treating furnace, the temperature of the material in the furnace can be controlled with high accuracy.

## Example

In this example, a four-high rolling mill 6 was used. The rolling mill 6 was equipped with a temperature detecting block 12. Thermocouples 11a and 11b were embedded in the temperature detecting block 12 with depths 0.3mm and 0.8mm, respectively, from the surface of the thermal sensor roll 1. The thermal sensor roll 1 equipped with the temperature detecting block 12 was disposed at the exit side of the rolling mill 6. Austenitic stainless steel as a metal strip 7 was rolled with a reduction ratio of 30% at a rolling speed of 600 m/min. The temperature Ts of heat streak formation under these conditions was experimentally 170°C.

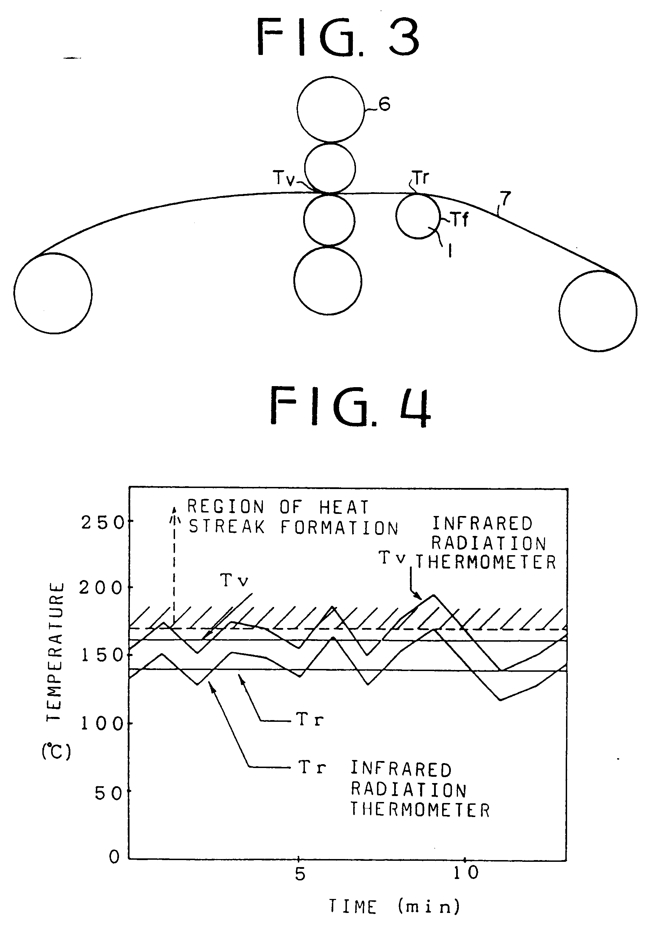

A temperature Tr of the metal strip 7 being rolled in contact with the thermal sensor 1 and a temperature Tv of the metal strip 7 just below the bite of the work roll were detected by the method according to the present invention. The changes of these temperatures Tr, Tv are shown in Figure 4. For comparison, values of temperatures Tr and Tv of the metal strip 7 detected using an infrared radiation thermometer are also shown in Figure 4.

It is noted from Figure 4 that the temperatures Tr, Tv obtained using the infrared radiation thermometer were irregularly changed within the dispersion of ± 30°C. This deviation is probably caused by such disturbance that the change of a rolling atmosphere affects on the values detected by the infrared radiation thermometer. It was difficult to predict the formation of heat streaks on the basis of such irregularly changing temperature Tv of the metal strip. Besides, the prediction on the formation of heat streaks was of poor accuracy and lack of reliability.

On the other hand, the temperature Tv of the metal strip being rolled just below the bite of the work roll detected according to the present invention was stable about 160°C. Hence proper information that the temperature Tv of the metal strip 7 being rolled just below the bite of the work roll was lower than the temperature Ts of heat streak formation was obtained with high reliability, by comparing said temperature Tv with the temperature Ts (= 170°C) of heat streak formation which was experimentally previously confirmed. Referring to the information, rolling operation was continued under the same rolling condition. Thereby, a cold rolled stainless steel strip excellent in surface appearance free from the formation of heat streaks was produced.

## Claims

1. A method of predicting the formation of heat streaks in a metal strip in a rolling mill, which method comprises:

    attaching one or more temperature detecting blocks, each having a plurality of thermocouples which are positioned at different depths from the surface, to a thermal sensor roll,

    arranging said thermal sensor roll at the outlet of the rolling mill at a position in contact with the metal strip,

    detecting the temperatures of the interior of said thermal sensor roll at said different depths by means of said thermocouples,

    calculating the temperature of the metal strip being rolled just below the bite of a work roll on the basis of measurements from the thermocouples, and

    comparing the calculated temperature with an expected temperature of heat streak formation previously derived from reduction ratio and rolling speed data.

## Patentansprüche

1. Verfahren zur Vorhersage der Bildung von Hitzefurchen in einem Metallband in einem Walzwerk, bei dem man

    einen oder mehrere Temperaturbestimmungsblöcke, von denen jeder mehrere in unterschiedlichen Tiefen von der Oberfläche angeordnete Thermoelemente hat, an einer Temperaturfühlerwalze anbringt,

    die genannte Temperaturfühlerwalze an dem Ausgang des Walzwerks in einer Position in Berührung mit dem Metallband anordnet,

    mittels der genannten Thermoelemente die Temperaturen des Inneren der genannten Temperaturfühlerwalze in den genannten unterschiedlichen Tiefen feststellt,

    auf Basis der Messungen von den Thermoelementen die Temperatur des in Walzung befindlichen Metallbandes gerade unterhalb des Angriffs einer Arbeitswalze berechnet, und

    die berechnete Temperatur mit einer erwarteten, zuvor aus dem Reduzierungsverhältnis und den Walzgeschwindigkeitsdaten abgeleiteten Temperatur der Hitzefurchenbildung vergleicht.

## Revendications

1. Méthode de pronostics de formation de traînées brûlées sur une bande de métal dans un train de laminoirs, laquelle méthode comprend:-

    la fixation d'un ou plusieurs blocs de détection de température, chacun d'eux ayant une pluralité de thermocouples qui sont placés à l'intérieur d'un cylindre de détection de température à différente profondeurs pa rapport à la surface,

    l'aménagement d'un cylindre de détection thermique à la sortie du train de laminoirs dans un endroit en contact avec la bande de métal,

    la détection de températures de l'intérieur de ce cylindre de détection thermique aux profondeurs mentionnées ci-dessus au moyen de thermocouples,

    détermination de la température de la bande de métal en cours de laminage juste en-dessous du point d'attaque du cylindre de laminage en fonction des mesures relevées par les thermocouples, et

    comparaison de la température déterminée avec une température de formation de traînées brûlées prévue préalablement déterminée en fonction d'informations sur le ratio de réduction et la vitesse de laminage.

# FIG. 1

# FIG. 2

# FIG. 3

# FIG. 4